# EUROPEAN PATENT APPLICATION

(11) **EP 4 765 836 A1**
(43) Date of publication of application: **24.06.2026**
(21) Application number: 24937800.1
(22) Date of filing: 20.12.2024
(51) Int. Cl.: H04N 21/4402

(54) **IMAGE PROCESSING METHOD AND ELECTRONIC DEVICE**

(30) Priority: 29.04.2024 CN 202410532439
(71) Applicant: HUAWEI TECHNOLOGIES CO., LTD., Shenzhen 518129 (CN)
(72) Inventor: SUN, Guanglu, Shenzhen, Guangdong 518129 (CN); CHANG, Ya, Shenzhen, Guangdong 518129 (CN); ZHANG, Minghan, Shenzhen, Guangdong 518129 (CN); LU, Zhongrui, Shenzhen, Guangdong 518129 (CN)
(74) Representative: Maiwald GmbH
(86) International application number: PCT/CN2024/141204
(87) International publication number: WO 2025/227773

(57) **Abstract**

Provided are an image processing method and an electronic device. In the method, in a scenario in which it is detected that frame interpolation/extrapolation is required, the electronic device obtains first 3D data of a preset object in a first native rendered frame, obtains a first 2D texture map of the first native rendered frame, obtains second 3D data of the preset object in a second native rendered frame, and obtains a second 2D texture map of the second native rendered frame, where the second native rendered frame is a next frame adjacent to the first native rendered frame; determines a first motion vector based on the first 3D data and the second 3D data; determines a second motion vector based on the first 2D texture map and the second 2D texture map; and generates a predicted frame based on the first motion vector and the second motion vector. Through fusion of the 3D data of the preset object, this method can improve quality of the generated predicted frame, and reduce a probability that problems such as ghosting and blurring occur in the predicted frame.

## Description

### CROSS-REFERENCE TO RELATED APPLICATIONS

This application claims priority to Chinese Patent Application No. 202410532439.2, filed with the China National Intellectual Property Administration on April 29, 2024 and entitled "IMAGE PROCESSING METHOD AND ELECTRONIC DEVICE", which is incorporated herein by reference in its entirety.

### TECHNICAL FIELD

This application relates to the field of electronic device technologies, and in particular, to an image processing method and an electronic device.

### BACKGROUND

In a scenario in which an electronic device displays a plurality of frames of images, a high frame rate and low power consumption help improve user experience. For example, in a gaming scenario, picture quality, a frame rate, and power consumption are three important factors that affect game experience. In another example, in an animation playing scenario, a frame rate and power consumption also play crucial roles in animation watching experience.

Frame interpolation/extrapolation means performing calculation based on frame information of previous and next native rendered frames to obtain a predicted frame, to increase a frame rate. In addition, compared with using native rendered frames to increase a frame rate, frame interpolation/extrapolation further achieves lower power consumption. In some existing frame interpolation/extrapolation methods, for an object with a large displacement between previous and next native rendered frames, problems such as ghosting and blurring are likely to occur on the object in a generated predicted frame, resulting in degradation of picture quality. Therefore, how to improve quality of a predicted frame generated in a frame interpolation/extrapolation scenario is worth studying.

### SUMMARY

This application provides an image processing method and an electronic device, to provide a new frame interpolation/extrapolation manner, to improve quality of a predicted frame generated in a frame interpolation/extrapolation scenario.

According to a first aspect, this application provides an image processing method. The method may be performed by an electronic device. The method includes: detecting a preset event, where the preset event indicates that a frame interpolation/extrapolation function is in an enabled state; in response to the preset event, obtaining first 3D data of a preset object in a first native rendered frame, obtaining a first 2D texture map of the first native rendered frame, obtaining second 3D data of the preset object in a second native rendered frame, and obtaining a second 2D texture map of the second native rendered frame, where the second native rendered frame is a next frame adjacent to the first native rendered frame; determining a first motion vector based on the first 3D data and the second 3D data; and determining a second motion vector based on the first 2D texture map and the second 2D texture map; and generating a predicted frame based on the first motion vector and the second motion vector.

In the foregoing method, in a frame interpolation/extrapolation scenario, the electronic device fuses the 3D data of the preset object, so that precision of the motion vector for generating the predicted frame can be improved, thereby improving quality of the generated predicted frame, and reducing a probability that problems such as ghosting and blurring occur in the predicted frame.

Optionally, the preset object is pre-marked.

In a possible design, the method further includes: displaying the first native rendered frame; displaying the predicted frame; and displaying the second native rendered frame. In another possible design, the method further includes: displaying the first native rendered frame; displaying the second native rendered frame; and displaying the predicted frame.

In the foregoing design, in the frame interpolation/extrapolation scenario, the electronic device may display the predicted frame through frame interpolation/extrapolation in an interpolation mode or an extrapolation mode, so that a frame rate can be increased with low power consumption.

In a possible design, determining the first motion vector based on the first 3D data and the second 3D data may be implemented as: determining the first motion vector based on the first 3D data and the second 3D data by using a multi-level hash algorithm. For example, the electronic device may first divide 3D data of an image into different draw parts based on types, and perform unique hash matching at a first level; then divide the remaining 3D data that is not uniquely matched into different draw instances, and perform unique hash matching at a second level; and finally perform calculation and matching, based on a spatial distance, on the remaining 3D data that is not uniquely matched, to implement unique hash matching at a third level. The first running vector may be understood as a 3D running vector.

In the foregoing design, efficiency of calculating the first running vector can be improved by using the multi-level hash algorithm.

In a possible design, generating the predicted frame based on the first motion vector and the second motion vector may be implemented as: determining a first weight factor of the first motion vector and a second weight factor of the second motion vector; performing weighted fusion on the first motion vector and the second motion vector based on the first weight factor and the second weight factor, to obtain a third motion vector; and generating the predicted frame based on the third motion vector. The first running vector may be understood as a 3D running vector, the second running vector may be understood as a 2D running vector, and the third running vector may be understood as a motion vector obtained through weighted fusion.

In the foregoing design, the third motion vector is calculated through weighted fusion, so that accuracy of the obtained motion vector can be improved, thereby improving quality of the generated predicted frame.

In a possible design, detecting the preset event includes but is not limited to: detecting a first operation on a first control, where the first control is configured to manage the frame interpolation/extrapolation function, and the first operation is for enabling the frame interpolation/extrapolation function.

In the foregoing design, the electronic device provides, for a user through a user interface, the first control for indicating whether to enable the frame interpolation/extrapolation function, so that different requirements of different users for the frame interpolation/extrapolation scenario can be met, improving diversity of application scenarios.

Based on the foregoing possible designs, the first 3D data or the second 3D data may include but is not limited to at least one of the following data: 3D geometric vertex data, 3D polygon mesh data, and 3D geometric edge data.

In the foregoing design, fusing at least one of the 3D data can improve accuracy of calculating the running vector, thereby improving quality of the generated predicted frame.

According to a second aspect, this application provides an electronic device. The electronic device includes a plurality of functional modules, and the plurality of functional modules interact with each other to implement the method performed by the electronic device in the first aspect and the possible designs of the first aspect. The plurality of functional modules may be implemented based on software, hardware, or a combination of software and hardware, and the plurality of functional modules may be randomly combined or divided based on specific implementation.

According to a third aspect, this application provides an electronic device, including at least one processor and at least one memory. The at least one memory stores computer program instructions. When the electronic device runs, the at least one processor performs the method performed by the electronic device in the first aspect and the possible designs of the first aspect.

According to a fourth aspect, this application further provides a chip. The chip is configured to read a computer program stored in a memory, to perform the method performed by the electronic device in any one of the foregoing aspects and the possible designs of the foregoing aspects.

According to a fifth aspect, this application further provides a chip system. The chip system includes a processing circuit and a storage medium. The storage medium stores instructions. When executed by the processing circuit, the instructions are used to implement the method performed by the electronic device in any one of the foregoing aspects and the possible designs of the foregoing aspects. The chip system may include a chip, or may include a chip and another discrete component.

According to a sixth aspect, this application further provides a computer-readable storage medium. The computer-readable storage medium stores a computer program. When the computer program is executed by a computer, the computer is enabled to perform the method performed by the electronic device in any one of the foregoing aspects and the possible designs of the foregoing aspects.

According to a seventh aspect, this application further provides a computer program product including instructions. When the computer program product is run on a computer, the computer is enabled to perform the method performed by the electronic device in any one of the foregoing aspects and the possible designs of the foregoing aspects.

For technical effects that can be achieved according to the technical solutions in any one of the second aspect to the seventh aspect, refer to the description of technical effects that can be achieved according to the technical solutions in the first aspect. Details are not described herein again.

### BRIEF DESCRIPTION OF DRAWINGS

FIG. 1 is a diagram of a possible hardware structure of an electronic device;
FIG. 2 is a block diagram of a possible software system architecture of an electronic device;
FIG. 3A and FIG. 3B are a diagram of an application scenario to which an image processing method is applicable according to an embodiment of this application;
FIG. 4 is a schematic flowchart of pre-marking a preset object according to an embodiment of this application;
FIG. 5A and FIG. 5B are a schematic flowchart of an image processing method according to an embodiment of this application;
FIG. 6 is a schematic flowchart of calculating 3D_MV according to an embodiment of this application;
FIG. 7 is a time sequence diagram of image processing in an interpolation mode according to an embodiment of this application;
FIG. 8 is a time sequence diagram of image processing in an extrapolation mode according to an embodiment of this application;
FIG. 9 is another schematic flowchart of an image processing method according to an embodiment of this application;
FIG. 10 is a diagram of an example of a possible structure of an image processing apparatus according to an embodiment of this application; and
FIG. 11 is a diagram of an example of a possible structure of a device according to an embodiment of this application.

### DESCRIPTION OF EMBODIMENTS

The following describes in detail embodiments of this application with reference to accompanying drawings and embodiments.

With increasing prevalence and continuous advancement of electronic devices with a display function, such as a mobile phone, a tablet computer, a smart screen, and an intelligent device, functions of the electronic devices are gradually improved and enhanced. In a scenario in which an electronic device displays a plurality of frames of images, such as a gaming scenario or an animation playing scenario, frame interpolation/extrapolation may be usually implemented to increase a frame rate and reduce power consumption. An image processing method provided in embodiments of this application is applicable to a scenario, obtained based on 3D scene modeling, of displaying a plurality of frames of images. For example, in a gaming scenario obtained based on 3D scene modeling, game characters and/or game scenes in a game are obtained based on 3D scene modeling. In another example, in an animation playing scenario is obtained based on 3D scene modeling, animation characters or animation scenes in an animation are obtained based on 3D scene modeling.

For ease of understanding, the following first describes technical terms that may be related to the method provided in this application.
(1) Frame interpolation/extrapolation means generating a predicted frame, that is, a new frame image, based on previous and next native rendered frames. Optionally, interpolation is that the predicted frame is displayed between the two native rendered frames. In another optional manner, extrapolation is that the predicted frame is displayed after the next native rendered frame.

Through frame interpolation/extrapolation, time for displaying each frame of image can be shortened, or it may be understood that a frame rate for displaying images by an electronic device can be increased. For example, an original frame rate 60 hertz (Hz) may be increased to 120 Hz through frame interpolation/extrapolation. In this way, stability of displaying a plurality of frames of images by the electronic device can be improved, and user experience with a higher frame rate can be provided.

(2) Motion estimation and motion compensation (motion estimation and motion compensation, MEMC) are a frame interpolation/extrapolation technology.

In a possible implementation, motion estimation is performed based on 2D texture maps of previous and next native rendered frames, and then warping and hole filling are performed on the previous and next native rendered frames based on motion vectors, to obtain a to-be-added predicted frame. The warping means performing various operations on an image by using a rotation-scaling matrix, where the operations may include but are not limited to translation, rotation around a point, or scaling. A warping process creates holes (or "holes"). Then, through hole filling (or "hole filling"), an optimized predicted frame can be obtained, thereby improving integrity of the predicted frame. However, the motion vectors obtained through motion estimation performed based on the 2D texture maps have large errors, potentially resulting in severe ghosting and blurring in the predicted frame. For the motion estimation, motion compensation, and motion vector (motion vector, MV), refer to descriptions in the conventional technology. Details are not described in embodiments of this application.

In view of this, embodiments of this application provide an image processing method. In this method, a preset object is pre-marked. In this case, in a process of adding a predicted frame, a motion vector of higher precision can be obtained by obtaining 3D data of the preset object, so that the predicted frame of higher quality can be generated. In this way, in a frame interpolation/extrapolation scenario, through frame interpolation/extrapolation with reference to 3D data, an error of an obtained motion vector can be reduced, picture quality in the frame interpolation/extrapolation scenario can be improved, and a probability that problems such as ghosting and blurring occur in a predicted frame can be reduced.

Embodiments of this application may be applied to an electronic device with a display function, such as a mobile phone, a PC, a tablet computer, a wearable device (for example, a watch or a band), an on-board device, an augmented reality (augmented reality, AR) device/virtual reality (virtual reality, VR) device, a notebook computer, an ultra-mobile personal computer (ultra-mobile personal computer, UMPC), a netbook, a personal digital assistant (personal digital assistant, PDA), or a smart home device (for example, a smart television or a smart speaker). It may be understood that a specific type of the electronic device is not limited in embodiments of this application.

An example embodiment of the electronic device to which embodiments of this application may be applied includes but is not limited to an electronic device using HarmonyOS^{®}, iOS^{®}, Android^{®}, Microsoft^{®}, or another operating system. Alternatively, the portable electronic device may be another portable electronic device, for example, a laptop (laptop) computer with a touch-sensitive surface (for example, a touch panel).

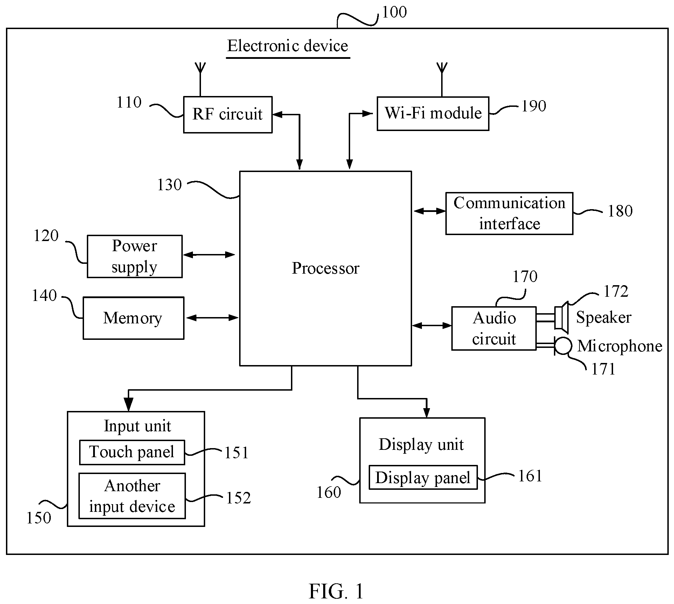

FIG. 1 is a diagram of a possible hardware structure of an electronic device. The electronic device 100 includes components such as a radio frequency (radio frequency, RF) circuit 110, a power supply 120, a processor 130, a memory 140, an input unit 150, a display unit 160, an audio circuit 170, a communication interface 180, and a wireless-fidelity (wireless-fidelity, Wi-Fi) module 190. A person skilled in the art may understand that the hardware structure of the electronic device 100 shown in FIG. 1 does not constitute a limitation on the electronic device 100. The electronic device 100 provided in embodiments of this application may include more or fewer components than those shown in the figure, or two or more components may be combined, or a different component configuration may be used. Various components shown in FIG. 1 may be implemented in hardware, software, or a combination of hardware and software that includes one or more signal processing and/or application-specific integrated circuits.

The following specifically describes each component of the electronic device 100 with reference to FIG. 1.

The RF circuit 110 may be configured to receive and send data in a communication or call process. Specifically, after receiving downlink data from a base station, the RF circuit 110 sends the downlink data to the processor 130 for processing, and sends to-be-sent uplink data to the base station. The RF circuit 110 usually includes but is not limited to an antenna, at least one amplifier, a transceiver, a coupler, a low noise amplifier (low noise amplifier, LNA), and a duplexer.

In addition, the RF circuit 110 may also communicate with another device through a wireless communication network. The wireless communication may be implemented by using any communication standard or protocol, including but not limited to global system for mobile communications (global system for mobile communications, GSM), general packet radio service (general packet radio service, GPRS), code division multiple access (code division multiple access, CDMA), wideband code division multiple access (wideband code division multiple access, WCDMA), long term evolution (long term evolution, LTE), email, and short messaging service (short messaging service, SMS).

The electronic device 100 can further implement a communication service to interact with another electronic device. Therefore, the electronic device 100 requires a data transmission function, that is, the electronic device 100 needs to include a communication module. Although FIG. 1 shows communication modules such as the RF circuit 110, the Wi-Fi module 190, and the communication interface 180, it may be understood that the electronic device 100 includes at least one of the foregoing components or another communication module (for example, a Bluetooth module) configured to implement communication, to perform data transmission.

For example, when the electronic device 100 is a mobile phone, the electronic device 100 may include the RF circuit 110, and may further include the Wi-Fi module 190, or may include a Bluetooth module (not shown in FIG. 1). When the electronic device 100 is a computer, the electronic device 100 may include the communication interface 180, and may further include the Wi-Fi module 190, or may include a Bluetooth module (not shown in FIG. 1). When the electronic device 100 is a tablet computer, the electronic device 100 may include the Wi-Fi module, or may include a Bluetooth module (not shown in FIG. 1).

A Wi-Fi technology is a short-range wireless transmission technology. The electronic device 100 may be connected to an access point (access point, AP) by the Wi-Fi module 190, to implement access to a data network. The Wi-Fi module 190 may be configured to receive and send data in a communication process.

The electronic device 100 may be physically connected to another device through the communication interface 180. Optionally, the communication interface 180 is connected to a communication interface of the another device by a cable, to implement data transmission between the electronic device 100 and the another device.

The memory 140 may be configured to store a software program and a module. The processor 130 executes various function applications of the electronic device 100 and processes data by running the software program and the module that are stored in the memory 140. Optionally, the memory 140 may mainly include a program storage area and a data storage area. The program storage area may store an operating system (mainly including software programs or modules respectively corresponding to a kernel layer, a system layer, an application framework layer, an application layer, and the like).

In addition, the memory 140 may include a high-speed random access memory, and may further include a non-volatile memory, for example, at least one magnetic disk storage device, a flash memory, or another volatile solid-state storage device. In an embodiment of this application, the memory 140 may store computer program instructions for implementing the image processing method provided in embodiments of this application, for example, store obtained 3D data, or store computer program instructions for obtaining 3D data of a preset object or computer program instructions for generating a predicted frame.

The input unit 150 may be configured to: receive editing operations that are for different types of data objects such as digit or character information and that are input by a user, and generate a key signal input related to a user setting and function control of the electronic device 100. Optionally, the input unit 150 may include a touch panel 151 and another input device 152. The touch panel 151, also referred to as a touchscreen, may collect a touch operation of a user on or near the touch panel 151 (for example, an operation of the user on or near the touch panel 151 by using any suitable object or accessory such as a finger or a stylus), and drive a corresponding connection apparatus based on a preset program. In an embodiment of this application, the touch panel 151 may collect a user operation performed by the user on a display panel 161. The user operation may be, for example, setting a status of a "high frame rate" or "superframe" control in a game application to be enabled.

Optionally, the another input device 152 may include but is not limited to one or more of a physical keyboard, a function button (such as a volume control button or a switch button), a trackball, a mouse, and a joystick. For example, when the electronic device 100 is a notebook computer, the another input device 152 may be a mouse and/or a keyboard.

The display unit 160 may be configured to display information input by the user or information provided for the user, and various menus of the electronic device 100. The display unit 160 is a display system of the electronic device 100, and is configured to present an interface to implement human-computer interaction. The display unit 160 may include the display panel 161. Optionally, the display panel 161 may be configured in a form of a liquid crystal display (liquid crystal display, LCD), an organic light-emitting diode (organic light-emitting diode, OLED), or the like. In an embodiment of this application, the display unit 160 may be configured to display a user interface for the user, for example, a game interface or an animation interface processed according to the method provided in embodiments of this application. It may be understood that the game interface includes a native rendered frame and also includes a predicted frame obtained by using the method provided in this application. Similarly, the animation interface includes a native rendered frame and also includes a predicted frame obtained by using the method provided in this application.

The processor 130 is a center for controlling the electronic device 100 and is connected to the components through various interfaces and lines. The processor 130 runs or executes the software program and/or module stored in the memory 140, and calls the data stored in the memory 140, to perform various functions of the electronic device 100 and process data, to implement a plurality of services based on the electronic device 100. In an embodiment of this application, the processor 130 may be configured to implement the image processing method provided in embodiments of this application, so that quality of a predicted frame obtained in a frame interpolation/extrapolation scenario can be improved, and problems such as blurring and ghosting caused by a large displacement of a dynamic object can be reduced. In addition, compared with frame interpolation/extrapolation by using a native rendered frame, this method can further reduce power consumption of the electronic device.

The electronic device 100 further includes the power supply 120 (for example, a battery) configured to supply power to each component. Optionally, the power supply 120 may be logically connected to the processor 130 by a power management system, to implement functions such as charging, discharging, and power consumption by using the power management system.

As shown in FIG. 1, the electronic device 100 further includes the audio circuit 170, a microphone 171, and a speaker 172, and may provide an audio interface between the user and the electronic device 100. The audio circuit 170 may be configured to convert audio data into a signal that can be identified by the speaker 172, and transmit the signal to the speaker 172. The speaker 172 converts the signal into a sound signal for output. The microphone 171 is configured to collect an external sound signal (for example, a sound of a person speaking, or another sound), convert the collected external sound signal into a signal that can be identified by the audio circuit 170, and send the signal to the audio circuit 170. The audio circuit 170 may be further configured to convert the signal sent by the microphone 171 into audio data, and then output the audio data to the RF circuit 110 for sending to, for example, another electronic device, or output the audio data to the memory 140 for subsequent processing.

Although not shown in FIG. 1, the electronic device 100 may further include a camera, at least one sensor, and the like. Details are not described herein again. The at least one sensor may include but is not limited to a pressure sensor, a barometric pressure sensor, an acceleration sensor, a distance sensor, a fingerprint sensor, a touch sensor, and a temperature sensor.

An operating system (operating system, OS) in embodiments of this application is the most basic system software running on the electronic device 100. A software system of the electronic device 100 may use a layered architecture, an event-driven architecture, a microkernel architecture, a micro service architecture, or a cloud architecture. In an embodiment of this application, an operating system with a layered architecture is used as an example to describe a software system architecture of the electronic device 100.

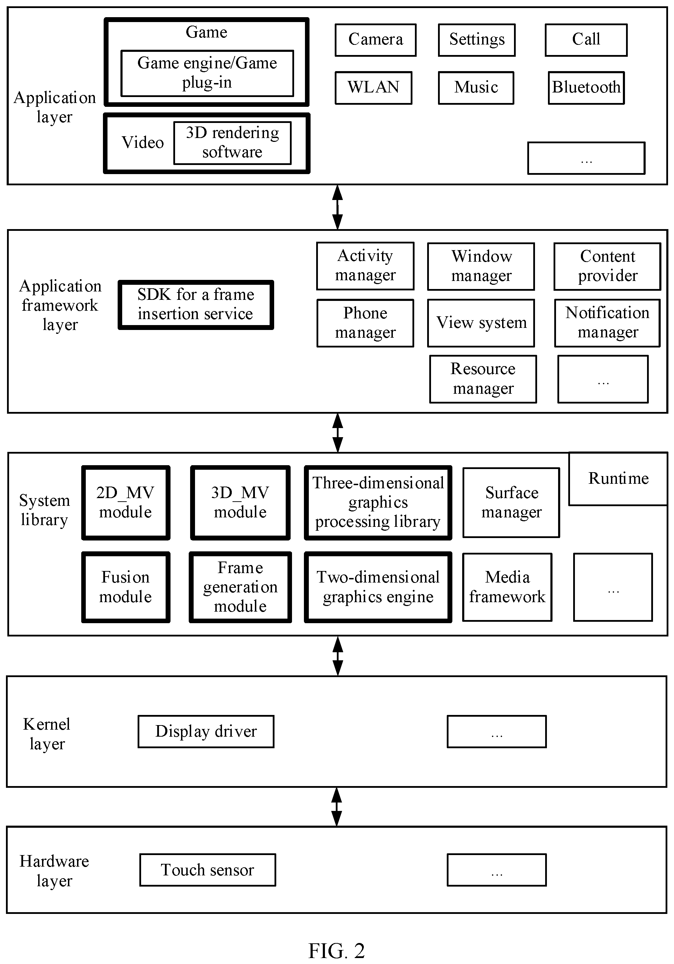

FIG. 2 is a block diagram of a possible software system architecture of an electronic device. As shown in FIG. 2, the software system architecture of the electronic device may be a layered architecture. For example, software may be divided into several layers, and each layer has a clear role and task. The layers communicate with each other through a software interface. In some embodiments, an operating system is divided into five layers: an application layer, an application framework (framework, FWK) layer, runtime and a system library, a kernel layer, and a hardware layer from top to bottom.

The application layer may include a series of application packages. As shown in FIG. 2, the application layer may include Camera, Settings, a third-party application, and the like. The third-party application may include a wireless local area network (wireless local area network, WLAN), Music, Call, Bluetooth, and the like, and may further include Video, Game, and the like. The game application may further include a tool such as a game engine/game plug-in, and the game engine/game plug-in can help a developer efficiently and conveniently develop the game application. The video application may further include a tool such as 3D rendering software, and the 3D rendering software can help an animation producer efficiently and conveniently produce an animation.

In an embodiment of this application, the application layer may be configured to present a display interface. The display interface may include a predicted frame obtained based on an image processing method in the following embodiments, and may further include a native rendered frame. Optionally, when frame interpolation/extrapolation is performed in an interpolation mode, a predicted frame is displayed between two native rendered frames. In another optional manner, when frame interpolation/extrapolation is performed in an extrapolation mode, a predicted frame is displayed after two native rendered frames.

In a possible implementation, an application may be developed by using Java language and completed by calling an application programming interface (application programming interface, API) provided by the application framework layer. A developer may interact with a bottom layer (such as the hardware layer or the kernel layer) of the operating system through the application framework layer, to develop an application of the developer. The application framework layer mainly includes a series of services and management systems of the operating system.

The application framework layer provides an application programming interface and a programming framework for an application at the application layer. The application framework layer includes some predefined functions. As shown in FIG. 2, the application framework layer may include an activity manager, a window manager, a content provider, a view system, a phone manager, a resource manager, a notification manager, and the like. In an embodiment of this application, the application framework layer may further include a software development kit (software development kit, SDK) for a frame interpolation/extrapolation service. The SDK for the frame interpolation/extrapolation service is configured to encapsulate the frame interpolation/extrapolation service and manage the frame interpolation/extrapolation service. In addition, the SDK for the frame interpolation/extrapolation service can support calling at the application layer through an open interface.

The activity manager is configured to manage a life cycle of each application, provide a common navigation rollback function, and provide an interaction interface for windows of all programs.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history and bookmark, an address book, and the like.

The view system includes a visual control such as a control for displaying text or a control for displaying an image. The view system may be configured to construct an application. A display interface may include one or more views. For example, a display interface including a short-message notification icon may include a text display view and an image display view.

The phone manager is configured to provide a communication function for the electronic device, for example, management of a call status (including answered, ended, or the like).

The resource manager provides various resources, such as a localized character string, an icon, an image, a layout file, and a video file, for an application.

The notification manager enables an application to display notification information in a status bar, and may be configured to convey a notification message. The notification message may automatically disappear after a short pause without requiring a user interaction. For example, the notification manager is configured to notify download completion, provide a message notification, and the like. The notification manager may also provide a notification that appears in a status bar at the top of the system in a form of a graph or a text scroll bar, for example, a notification of an application that is run on a background, or may provide a notification that appears on a screen in a form of a dialog window. For example, text information is displayed in the status bar, an alert tone is made, the electronic device vibrates, or an indicator blinks.

The runtime includes a core library and a virtual machine. The runtime is responsible for scheduling and managing the operating system.

The core library includes two parts: a functional function that needs to be called in Java language, and a core library of the operating system. The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL). In an embodiment of this application, the system library may further include a 2D motion vector (motion vector, MV) module, a 3D_MV module, a fusion module, and a frame generation module.

The 2D_MV module is configured to perform calculation based on a 2D texture map to obtain 2D_MV of a predicted frame.

The 3D_MV module is configured to perform calculation based on 3D data of a preset object to obtain 3D_MV of the preset object in the predicted frame, where the 3D data may be, for example, at least one of 3D geometric vertex data, 3D polygon mesh data, and 3D geometric edge data.

The fusion module is configured to perform fusion based on the 2D_MV and the 3D_MV to obtain a fused MV of the predicted frame.

The frame generation module is configured to perform motion compensation based on the fused MV and then generate the predicted frame.

The three-dimensional graphics processing library is configured to implement three-dimensional graphics drawing, image rendering, composition, layer processing, and the like.

The two-dimensional graphics engine is a drawing engine for two-dimensional drawing.

In some embodiments, the three-dimensional graphics processing library may be configured to draw a three-dimensional motion trajectory image, and the two-dimensional graphics engine may be configured to draw a two-dimensional motion trajectory image.

The surface manager is configured to manage a display subsystem and provide fusion of two-dimensional and 3D layers for a plurality of applications.

The media framework supports playback and recording in various common audio and video formats, and static image files. The media framework can support various audio and video coding formats such as MPEG-4, H.264, MP3, AAC, AMR, JPG, and PNG.

The kernel layer is a layer between hardware and software. The kernel layer includes at least a display driver.

The hardware layer may include various sensors, for example, a touch sensor. For components included in the hardware layer, refer to FIG. 1. Details are not described herein again.

Usually, the electronic device 100 may run a plurality of applications simultaneously. In a simple case, one application may correspond to one process. In a complex case, one application may correspond to a plurality of processes. Each process has a process number (process ID).

It should be understood that "at least one of the following items (pieces)" or a similar expression thereof in embodiments of this application indicates any combination of these items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more than two. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects.

In addition, it should be understood that in description of this application, terms such as "first" and "second" are merely used for distinguishing and description, but should not be understood as indicating or implying relative importance, or should not be understood as indicating or implying a sequence.

It should be understood that the hardware structure of the electronic device may be shown in FIG. 1, and the software system architecture may be shown in FIG. 2. The software program and/or module corresponding to the software system architecture of the electronic device may be stored in the memory 140. The processor 130 may run the software program and application that are stored in the memory 140, to perform a procedure of the image processing method provided in embodiments of this application.

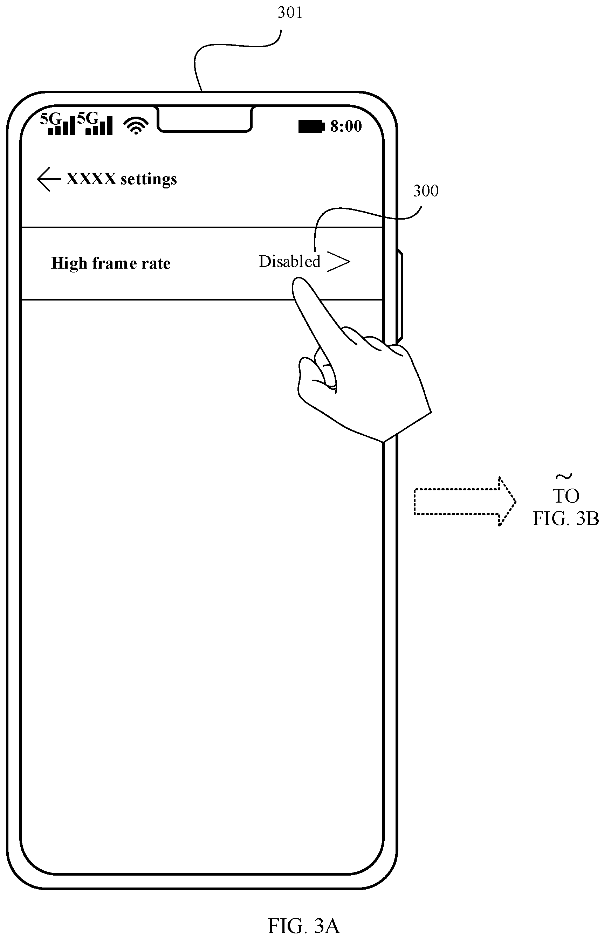

To facilitate understanding of the image processing method provided in this application, the following describes, with reference to content shown in FIG. 3A to FIG. 8, an implementation process of the method provided in this application.

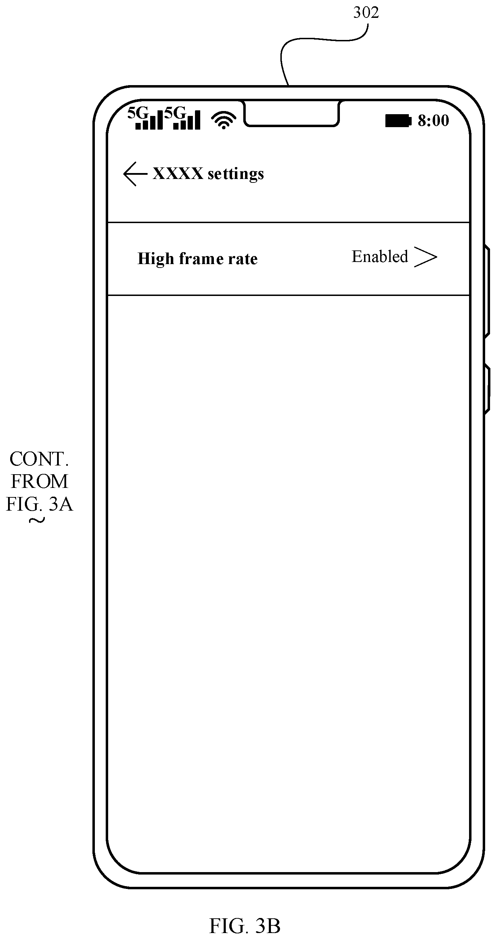

Embodiments of this application are applicable to a display scenario in which a frame rate is increased. For example, FIG. 3A and FIG. 3B are a diagram of an application scenario to which an image processing method is applicable according to an embodiment of this application. An interface 301 shown in FIG. 3A is a possible setting interface included in an electronic device, for example, a game setting interface or a video setting interface. A "high frame rate" control 300 included in the interface 301 is in a disabled state. The electronic device may display an interface 302 in response to an operation on the control 300 in the interface 301. For example, the operation on the control 300 may include but is not limited to a click/tap operation, a double-click/tap operation, a touch and hold operation, or a non-contact operation. A specific type of the operation is not limited in this application. It can be seen from the interface 302 that the "high frame rate" control 300 is switched from the disabled state in the interface 301 to an enabled state. It may also be understood that a frame interpolation/extrapolation function is in the enabled state.

With reference to the scenario shown in FIG. 3A and FIG. 3B, the electronic device may detect that a high frame rate function is set to be in the enabled state, and generate a frame prediction command in response to the high frame rate function being set to be in the enabled state, to implement frame interpolation/extrapolation by using the image processing method provided in embodiments of this application. For example, the interface 302 is a game setting interface. After frame interpolation/extrapolation is performed on a game application interface included in a game application, the electronic device displays the game application interface. For ease of understanding, the following describes differences between two different setting scenarios in Table 1:

**Table 1**

| "High frame rate" control 300 | Game application interface |
|---|---|
| Disabled state | Native rendered frame 1, native rendered frame 2, native rendered frame 3, ... |
| Enabled state | Native rendered frame 1, predicted frame 1, native rendered frame 2, predicted frame 2, native rendered frame 3, ... |

It can be learned from Table 1 that, after the high frame rate function is set to be in the enabled state, image frames included in the game application interface displayed by the electronic device may include a native rendered frame, and may also include a predicted frame between two native rendered frames. For example, the predicted frame 1 may be obtained through calculation based on frame information of the native rendered frame 1 and frame information of the native rendered frame 2, and the predicted frame 2 may be obtained through calculation based on frame information of the native rendered frame 2 and frame information of the native rendered frame 3. In this way, in a process in which the electronic device displays the game application interface, a frame rate can be increased, so that interface display stability and clarity can be improved. It may be understood that the native rendered frame 2 is a next frame adjacent to the native rendered frame 1, and the native rendered frame 3 is a next frame adjacent to the native rendered frame 2.

It should be noted that FIG. 3A and FIG. 3B show a possible scenario. The high frame rate function shown in FIG. 3A and FIG. 3B may be adaptively enabled in response to a user requirement. In another possible scenario, the high frame rate function may be, for example, enabled by default. A display scenario in which a frame rate is increased is not limited in embodiments of this application.

In addition, the frame interpolation/extrapolation result shown in Table 1 is merely a possible example. In another possible example, more or fewer interpolated frames may be included. For example, an original frame rate is 60 frames, and a high frame rate is 90 frames.

In a scenario, obtained based on 3D scene modeling, of displaying a plurality of frames of images, the image usually includes a 3D object. For example, a 3D object included in a gaming scenario may be a game character, and a 3D object included in an animation playing scenario may be an animation character.

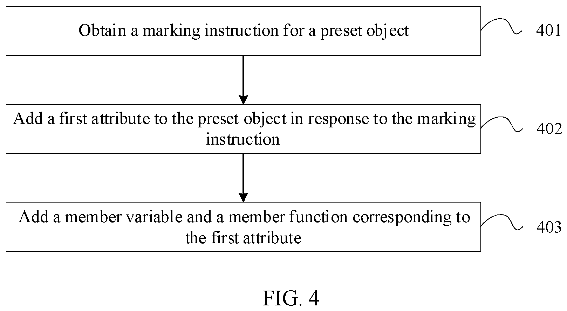

In an optional embodiment, in a process of developing a display scenario, a 3D object is pre-marked to obtain a preset object. In this case, during frame interpolation/extrapolation, 3D data about the preset object can be obtained based on the pre-marked preset object, so that motion estimation can be performed based on the 3D data to obtain 3D_MV. For example, FIG. 4 is a schematic flowchart of pre-marking a preset object according to an embodiment of this application.

Step 401: Obtain a marking instruction for a preset object.

For example, during game development, a marking operation performed on a game character by a game developer may be detected, and in response to the marking operation, it may be determined that the marking instruction for the preset object is obtained.

Step 402: Add a first attribute to the preset object in response to the marking instruction, where the first attribute is for implementing a marking function on the preset object.

Correspondingly, during application running, the electronic device may detect the presence of the first attribute, and then may determine the presence of the pre-marked preset object in response to the first attribute.

Step 403: Add a member variable and a member function corresponding to the first attribute.

The member variable and the member function are for indicating obtaining 3D data of the preset object during frame interpolation/extrapolation. Correspondingly, during application running, the electronic device may obtain the 3D data of the preset object based on the member variable and the member function corresponding to the first attribute.

In addition, the first attribute added according to the procedure shown in FIG. 4 may be integrated into an application plug-in, for example, a game plug-in. In this way, during application running, a function of the first attribute integrated into the application plug-in is called, so that the 3D data can be obtained more accurately and more efficiently based on the preset object. This marking manner is characterized by a small development volume.

Optionally, the pre-marked preset object is determined according to the procedure shown in FIG. 4, where a marking command for the preset object in a frame interpolation/extrapolation scenario may be implemented at a driver development kit (driver development kit, DDK) layer. The marking command is generated in response to the first attribute when the electronic device detects the first attribute. The DDK layer may be implemented in the system library, for the operating system included in the electronic device to mark the preset object, to obtain the 3D data corresponding to the preset object.

It should be noted that, in an embodiment of this application, the preset object may be pre-marked in another marking manner. A marking manner is not limited in this application.

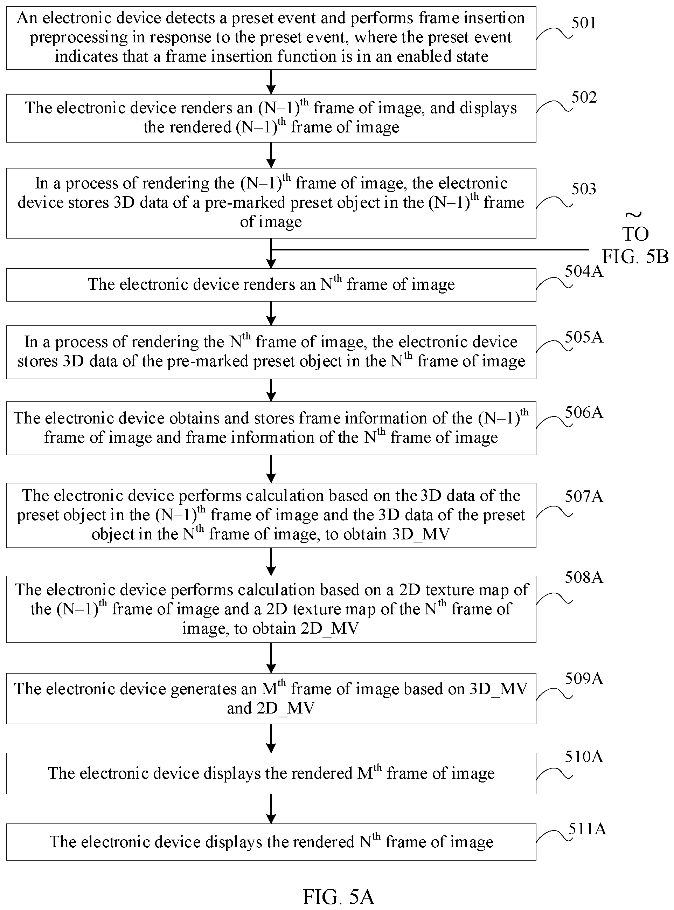

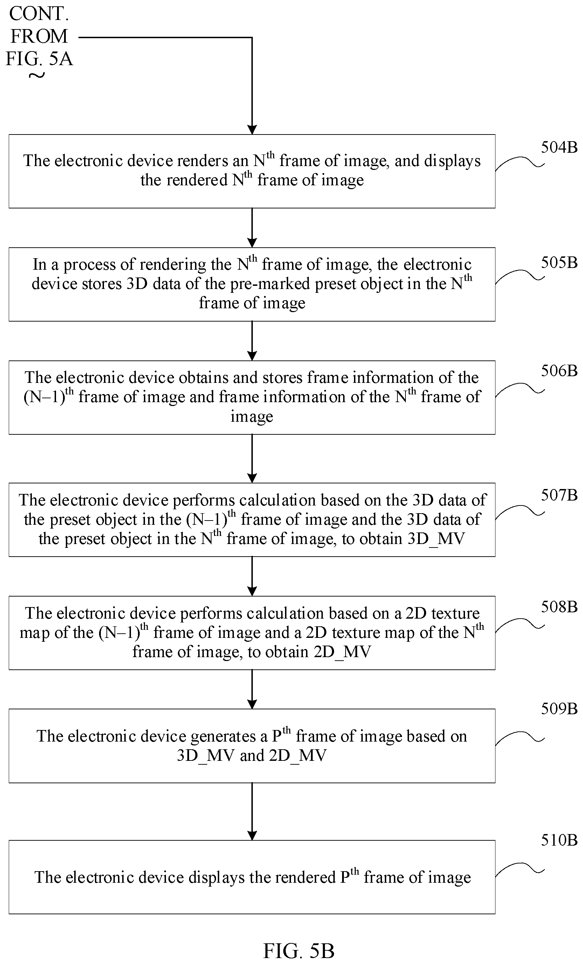

With reference to the application scenario described in FIG. 3A and FIG. 3B, FIG. 5A and FIG. 5B are a schematic flowchart of an image processing method according to an embodiment of this application. The procedure may include the following steps.

Step 501: An electronic device detects a preset event and performs frame interpolation/extrapolation preprocessing in response to the preset event, where the preset event indicates that a frame interpolation/extrapolation function is in an enabled state. For example, the electronic device detecting the preset event may be implemented as detecting a first operation on a first control, where the first control is configured to manage the frame interpolation/extrapolation function. For example, the first control is the high frame rate control 300 shown in FIG. 3A and FIG. 3B. When the high frame rate control 300 is displayed as enabled, the frame interpolation/extrapolation function is in an enabled state. When the high frame rate control 300 is displayed as disabled, the frame interpolation/extrapolation function is in a disabled state. It may be understood that the first operation is for enabling the frame interpolation/extrapolation function, and the first operation is, for example, an operation of setting the high frame rate control to be enabled in FIG. 3B.

A first application may be, for example, a game application or a video application.

For example, the frame interpolation/extrapolation preprocessing may include but is not limited to: initializing an interface, initializing a frame interpolation/extrapolation instance, requesting a CPU resource, a GPU resource, and a storage resource, creating a 3D_MV instance, setting an MV resolution, and setting an MV type. In this way, through frame interpolation/extrapolation preprocessing, frame interpolation/extrapolation can be performed more efficiently, so that a display frame rate of the first application can be increased.

In an optional scenario, the MV resolution and the MV type may be set as default. In addition, the MV resolution and the MV type may alternatively be adjusted based on indication information of an application developer. The MV type may include an interpolation mode and an extrapolation mode.

In another possible scenario, the MV resolution and the MV type may be determined based on indication information of an application developer. For example, the operating system of the electronic device may obtain the MV resolution and the MV type from a configuration file of an application development kit.

In still another possible scenario, the MV resolution and the MV type may be obtained through calculation based on indication information of an application developer. For example, the operating system of the electronic device may obtain a configuration rule of the MV resolution and the MV type from a configuration file of an application development kit, and then determine or adjust the MV resolution and the MV type according to the configuration rule.

The following describes some processes of frame interpolation/extrapolation through step 502 to step 505.

Step 502: The electronic device renders an (N-1)^{th} frame of image, and displays the rendered (N-1)^{th} frame of image.

N is a positive integer greater than or equal to 2.

Specifically, the electronic device sends the rendered (N-1)^{th} frame of image to the display unit 160 shown in FIG. 1 for display.

It may be understood that the (N-1)^{th} frame of image may be rendered by the processor 130 shown in FIG. 1, specifically a GPU or the like.

In addition, the electronic device renders the (N-1)^{th} frame of image by native rendering. It may also be understood that the (N-1)^{th} frame of image is a native rendered frame.

Step 503: In a process of rendering the (N-1)^{th} frame of image, the electronic device stores 3D data of a pre-marked preset object in the (N-1)^{th} frame of image.

The pre-marked preset object may be obtained according to the procedure shown in FIG. 4. During rendering, the 3D data corresponding to the pre-marked preset object can be obtained by calling a function of a first attribute integrated into an application plug-in.

For example, if the preset object is a game character, the electronic device may store 3D data of the game character in the (N-1)^{th} frame of image, where the 3D data may be specifically at least one of 3D geometric vertex data, 3D polygon mesh data, 3D geometric edge data, and the like.

For example, the electronic device may store the 3D data of the preset object by using a preset buffer (buffer). It may be understood that, in a process of performing step 502, step 503 may be performed in parallel through another process or thread. In this case, storage of the 3D data of the preset object in the (N-1)^{th} frame of image can be implemented in parallel with native rendering of the (N-1)^{th} frame of image, without affecting the native rendering of the (N-1)^{th} frame of image.

The following separately describes the interpolation mode and the extrapolation mode that are included in the MV type.

### (1) Interpolation mode

Step 504A: The electronic device renders an N^{th} frame of image.

It may be understood that the N^{th} frame of image may also be rendered by the processor 130 shown in FIG. 1, specifically a GPU or the like.

In addition, the electronic device renders the N^{th} frame of image by native rendering. It may also be understood that the N^{th} frame of image is a native rendered frame, and the N^{th} frame of image is a next frame adjacent to the (N-1)^{th} frame of image.

Step 505A: In a process of rendering the N^{th} frame of image, the electronic device stores 3D data of the pre-marked preset object in the N^{th} frame of image.

The pre-marked preset object may be obtained according to the procedure shown in FIG. 4. During rendering, the 3D data corresponding to the pre-marked preset object can be obtained by calling a function of a first attribute integrated into an application plug-in.

For example, if the preset object is a game character, the electronic device may store 3D data of the game character in the N^{th} frame of image, where the 3D data may be specifically at least one of 3D geometric vertex data, 3D polygon mesh data, 3D geometric edge data, and the like.

For example, the electronic device may store the 3D data of the preset object by using a preset buffer. The preset buffer for storing the 3D data of the preset object in the N^{th} frame of image may be the same as the preset buffer for storing the 3D data of the preset object in the (N-1)^{th} frame of image.

It may be understood that, in a process of performing step 504A, step 505A may be performed in parallel through another process or thread. In this case, storage of the 3D data of the preset object in the N^{th} frame of image can be implemented in parallel with native rendering of the N^{th} frame of image, without affecting the native rendering of the N^{th} frame of image.

Step 506A: The electronic device obtains and stores frame information of the (N-1)^{th} frame of image and frame information of the N^{th} frame of image. The frame information may include but is not limited to: a 2D texture map, a depth map, and a camera parameter.

It should be noted that the electronic device may alternatively obtain the frame information of the (N-1)^{th} frame and the frame information of the N^{th} frame separately. A specific sequence of obtaining the frame information of the (N-1)^{th} frame and the frame information of the N^{th} frame is not limited in this application.

Step 507A: The electronic device performs calculation based on the 3D data of the preset object in the (N-1)^{th} frame of image and the 3D data of the preset object in the N^{th} frame of image, to obtain 3D_MV.

With reference to FIG. 2, when the game application at the application layer sends a frame prediction command, the frame interpolation/extrapolation service at the application framework layer may call an interface provided by the 3D_MV module, and perform calculation based on a created 3D_MV instance, to obtain 3D_MV. The frame prediction command may be generated by the electronic device in response to a case in which the high frame rate function is set to be in the enabled state.

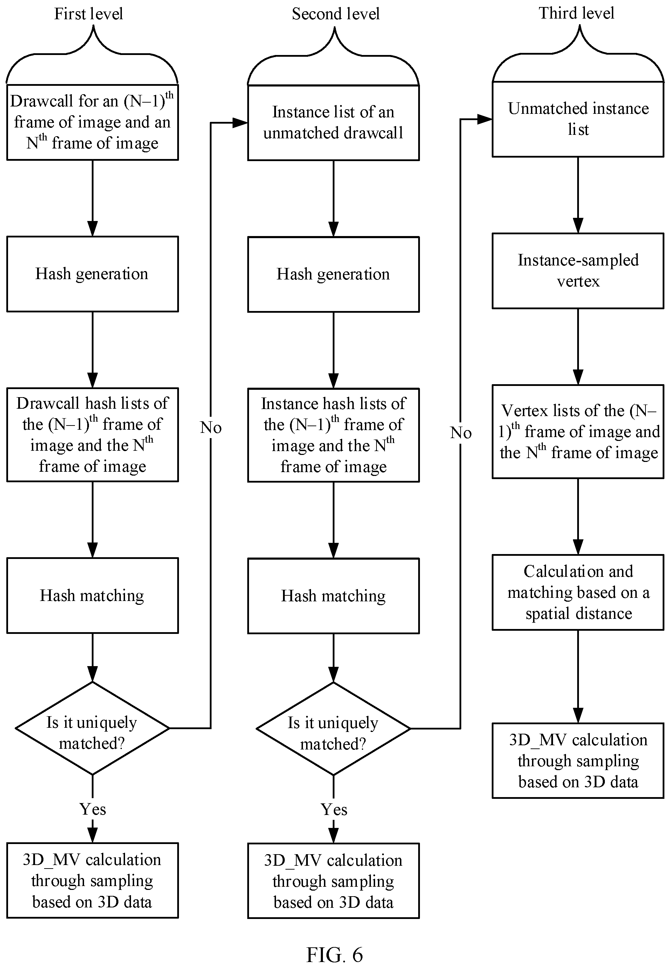

For example, FIG. 6 is a schematic flowchart of calculating 3D_MV according to an embodiment of this application. In this procedure, 3D_MV may be determined by using a multi-level mapping hash algorithm. Specifically, the multi-level hash algorithm may include registration across three levels: a draw call (drawcall), a draw instance (instance), and a geometric vertex (vertex), to obtain a high-precision motion vector. It can be seen from FIG. 6 that the calculation of 3D_MV may include the following several levels.
(1) First level: Hash generation is performed based on a drawcall, to obtain a drawcall hash list of the (N-1)^{th} frame of image and a drawcall hash list of the N^{th} frame of image separately, where the drawcall may include a plurality of draw calls. For example, 3D data of an image may be divided into different draw parts based on types, and each part corresponds to different draw calls. The types may include a character, scenery, and the like.

Hash matching is performed based on the drawcall hash list of the (N-1)^{th} frame of image and the drawcall hash list of the N^{th} frame of image. A uniquely matched hash value in the two drawcall hash lists is determined by determining whether the hash value is uniquely matched. In this case, 3D_MV can be calculated through sampling based on 3D data corresponding to the uniquely matched hash value. In addition, the remaining 3D data other than the 3D data corresponding to the uniquely matched drawcall hash value may be processed at a second level.

(2) Second level: Hash generation is performed based on a draw instance, to obtain an instance hash list of the (N-1)^{th} frame of image and an instance hash list of the N^{th} frame of image separately, where the draw instance may include a plurality of instances. For example, a character may be divided into a plurality of instances such as a head, a body, a limb, and skin. It may be understood that the instance hash list of the (N-1)^{th} frame of image and the instance hash list of the N^{th} frame of image are obtained based on the remaining 3D data obtained after processing at the first level.

Hash matching is performed based on the instance hash list of the (N-1)^{th} frame of image and the instance hash list of the N^{th} frame of image. A uniquely matched hash value in the two instance hash lists is determined by determining whether the hash value is uniquely matched. In this case, 3D_MV can be calculated through sampling based on 3D data corresponding to the uniquely matched hash value. In addition, the remaining 3D data (that is, an unmatched instance list) other than the 3D data corresponding to the uniquely matched instance hash value may be processed at a third level.

(3) Third level: For example, the 3D data is vertex data. The remaining instance that is not uniquely matched at the first level and the second level may be sampled to obtain a sampled vertex, to further obtain a vertex list of the (N-1)^{th} frame of image and a vertex list of the N^{th} frame of image.

Calculation and matching are performed based on spatial distances between vertexes included in the vertex list of the (N-1)^{th} frame of image and in the vertex list of the N^{th} frame of image. For example, vertex 1 in the (N-1)^{th} frame of image may match vertex 2 and vertex 3 in the N^{th} frame of image. If it is calculated that a spatial distance between the vertex 1 and the vertex 2 is less than a spatial distance between the vertex 1 and the vertex 3, the vertex 1 and the vertex 2 may be uniquely matched.

Then, after a unique matching result of the vertex is obtained based on the space distance, 3D_MV is calculated through sampling based on the 3D data at this part.

The vertex may be understood as matching in minimum granularity in an image frame.

In this way, 3D_MV calculation efficiency can be improved by using the multi-level hash matching algorithm.

Step 508A: The electronic device performs calculation based on a 2D texture map of the (N-1)^{th} frame of image and a 2D texture map of the N^{th} frame of image, to obtain 2D_MV.

It should be noted that a sequence of performing step 508A is not limited in embodiments of this application. Step 508A may be performed at any time after step 506A and before step 509A, or may be performed in parallel with step 507A.

Step 509A: The electronic device generates an M^{th} frame of image based on 3D_MV and 2D_MV. The M^{th} frame of image is also understood as a predicted frame or the like.

In an optional embodiment, the electronic device may determine a weight factor of 3D_MV and a weight factor of 2D_MV, and perform weighted fusion on 3D_MV and 2D_MV based on the weight factor of 3D_MV and the weight factor of 2D_MV, to obtain a fused MV; and then perform motion compensation based on the fused MV, to generate the M^{th} frame of image.

For example, forward mapping and backward mapping may be performed based on 3D_MV to obtain a 3D error graph, and linear conversion is performed on the 3D error graph to obtain a weight of 3D_MV; and forward mapping and backward mapping may be performed based on 2D_MV to obtain a 2D error graph, and then linear conversion is performed on the 2D error graph to obtain a weight of 2D_MV

In another example, respective weights of 3D_MV and 2D_MV may be manually set. Optionally, the weight corresponding to 3D_MV may be set to be greater than the weight corresponding to 2D_MV.

Step 510A: The electronic device displays the rendered M^{th} frame of image.

The M^{th} frame of image is only used for differentiation, and represents a preset frame generated based on the (N-1)^{th} frame of image and the N^{th} frame of image.

Specifically, the electronic device sends the rendered M^{th} frame of image to the display unit 160 shown in FIG. 1 for display.

Step 511A: The electronic device displays the rendered N^{th} frame of image.

N is a positive integer greater than or equal to 2.

Specifically, the electronic device sends the rendered N^{th} frame of image to the display unit 160 shown in FIG. 1 for display.

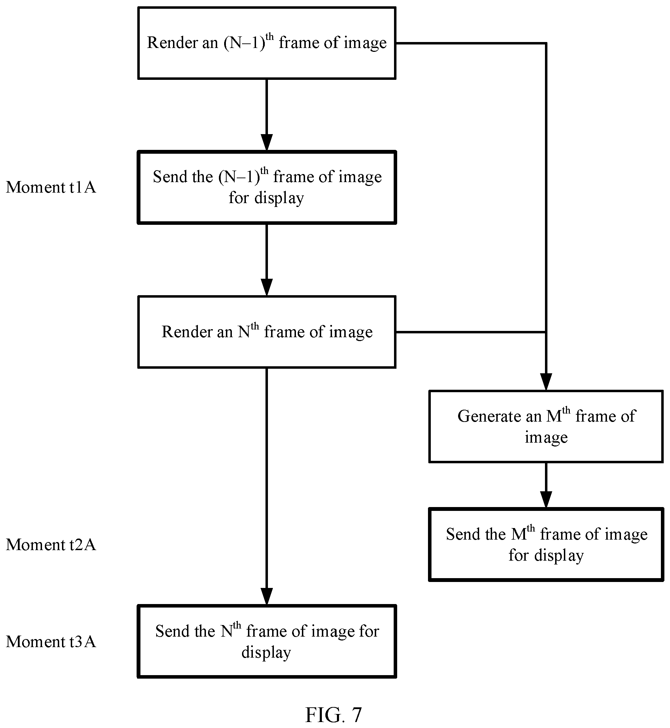

It may be understood that, in the interpolation mode, the generated M^{th} frame of image is sent for display between the (N-1)^{th} frame of image and the N^{th} frame of image. FIG. 7 is a time sequence diagram of image processing in an interpolation mode according to an embodiment of this application. For example, the (N-1)^{th} frame of image is sent for display at a moment t1A, the M^{th} frame of image may be sent for display at a moment t2A, and the N^{th} frame of image may be sent for display at a moment t3A, where the moment t1A is earlier than the moment t2A, and the moment t2A is earlier than the moment t3A. It may be understood that the (N-1)^{th} frame of image is obtained by rendering the (N-1)^{th} frame of image before being sent for display at the moment t1A, the M^{th} frame of image is generated based on the rendered (N-1)^{th} frame of image and N^{th} frame of image before being sent for display at the moment t2A, and the N^{th} frame of image is obtained by rendering the N^{th} frame of image before being sent for display at the moment t3A.

### (2) Extrapolation mode

Step 504B: The electronic device renders an N^{th} frame of image, and displays the rendered N^{th} frame of image.

N is a positive integer greater than or equal to 2.

Specifically, the electronic device sends the rendered N^{th} frame of image to the display unit 160 shown in FIG. 1 for display.

It may be understood that the N^{th} frame of image may also be rendered by the processor 130 shown in FIG. 1, specifically a GPU or the like.

In addition, the electronic device renders the N^{th} frame of image by native rendering. It may also be understood that the (N-1)^{th} frame of image is a native rendered frame.

Step 505B: In a process of rendering the N^{th} frame of image, the electronic device stores 3D data of the pre-marked preset object in the N^{th} frame of image.

The pre-marked preset object may be obtained according to the procedure shown in FIG. 4. During rendering, the 3D data corresponding to the pre-marked preset object can be obtained by calling a function of a first attribute integrated into an application plug-in.

For example, if the preset object is a game character, the electronic device may store 3D data of the game character in the N^{th} frame of image, where the 3D data may be specifically at least one of 3D geometric vertex data, 3D polygon mesh data, 3D geometric edge data, and the like.

For example, the electronic device may store the 3D data of the preset object by using a preset buffer. The preset buffer for storing the 3D data of the preset object in the N^{th} frame of image may be the same as the preset buffer for storing the 3D data of the preset object in the (N-1)^{th} frame of image.

It may be understood that, in a process of performing step 504B, step 505B may be performed in parallel through another process or thread. In this case, storage of the 3D data of the preset object in the N^{th} frame of image can be implemented in parallel with native rendering of the N^{th} frame of image, without affecting the native rendering of the N^{th} frame of image.

Step 506B: The electronic device obtains and stores frame information of the (N-1)^{th} frame of image and frame information of the N^{th} frame of image. The frame information includes but is not limited to: a 2D texture map, a depth map, and a camera parameter.

It should be noted that the electronic device may alternatively obtain the frame information of the (N-1)^{th} frame and the frame information of the N^{th} frame separately. A specific sequence of obtaining the frame information of the (N-1)^{th} frame and the frame information of the N^{th} frame is not limited in this application.

Step 507B: The electronic device performs calculation based on the 3D data of the preset object in the (N-1)^{th} frame of image and the 3D data of the preset object in the N^{th} frame of image, to obtain 3D_MV.

With reference to FIG. 2, when the game application at the application layer sends a frame prediction command, the frame interpolation/extrapolation service at the application framework layer may call an interface provided by the 3D_MV module, and perform calculation based on a created 3D_MV instance, to obtain 3D_MV. The frame prediction command may be generated by the electronic device in response to a case in which the high frame rate function is set to be in the enabled state.

For example, FIG. 6 is a schematic flowchart of calculating 3D_MV according to an embodiment of this application. In this procedure, registration across three levels: a draw call (drawcall), a draw instance (instance), and a geometric vertex (vertex) is implemented by using the multi-level mapping hash algorithm, to obtain a high-precision motion vector. It can be seen from FIG. 6 that the calculation of 3D_MV may include the following several levels.
(1) First level: Hash generation is performed based on a drawcall, to obtain a drawcall hash list of the (N-1)^{th} frame of image and a drawcall hash list of the N^{th} frame of image separately, where the drawcall may include a plurality of draw calls. For example, 3D data of an image may be divided into different draw parts based on types, and each part corresponds to different draw calls. The types may include a character, scenery, and the like.

Hash matching is performed based on the drawcall hash list of the (N-1)^{th} frame of image and the drawcall hash list of the N^{th} frame of image. A uniquely matched hash value in the two drawcall hash lists is determined by determining whether the hash value is uniquely matched. In this case, 3D_MV can be calculated through sampling based on 3D data corresponding to the uniquely matched hash value. In addition, the remaining 3D data other than the 3D data corresponding to the uniquely matched drawcall hash value may be processed at a second level.

(2) Second level: Hash generation is performed based on a draw instance, to obtain an instance hash list of the (N-1)^{th} frame of image and an instance hash list of the N^{th} frame of image separately, where the draw instance may include a plurality of instances. For example, a character may be divided into a plurality of instances such as a head, a body, a limb, and skin. It may be understood that the instance hash list of the (N-1)^{th} frame of image and the instance hash list of the N^{th} frame of image are obtained based on the remaining 3D data obtained after processing at the first level.

Hash matching is performed based on the instance hash list of the (N-1)^{th} frame of image and the instance hash list of the N^{th} frame of image. A uniquely matched hash value in the two instance hash lists is determined by determining whether the hash value is uniquely matched. In this case, 3D_MV can be calculated through sampling based on 3D data corresponding to the uniquely matched hash value. In addition, the remaining 3D data (that is, an unmatched instance list) other than the 3D data corresponding to the uniquely matched instance hash value may be processed at a third level.

(3) Third level: For example, the 3D data is vertex data. The remaining instance that is not uniquely matched at the first level and the second level may be sampled to obtain a sampled vertex, to further obtain a vertex list of the (N-1)^{th} frame of image and a vertex list of the N^{th} frame of image.

Calculation and matching are performed based on spatial distances between vertexes included in the vertex list of the (N-1)^{th} frame of image and in the vertex list of the N^{th} frame of image. For example, vertex 1 in the (N-1)^{th} frame of image may match vertex 2 and vertex 3 in the N^{th} frame of image. If it is calculated that a spatial distance between the vertex 1 and the vertex 2 is less than a spatial distance between the vertex 1 and the vertex 3, the vertex 1 and the vertex 2 may be uniquely matched.

Then, after a unique matching result of the vertex is obtained based on the space distance, 3D_MV is calculated through sampling based on the 3D data at this part.

The vertex may be understood as matching in minimum granularity in an image frame.

In this way, 3D_MV calculation efficiency can be improved by using the multi-level hash matching algorithm.

Step 508B: The electronic device performs calculation based on a 2D texture map of the (N-1)^{th} frame of image and a 2D texture map of the N^{th} frame of image, to obtain 2D_MV.

It should be noted that a sequence of performing step 508B is not limited in embodiments of this application. Step 508B may be performed at any time after step 506B and before step 509B, or may be performed in parallel with step 507B.

Step 509B: The electronic device generates a P^{th} frame of image based on 3D_MV and 2D_MV. The P^{th} frame of image is also understood as a predicted frame or the like.

In an optional embodiment, the electronic device may perform weighted fusion on 3D_MV and 2D_MV, to obtain a fused MV; and then perform motion compensation based on the fused MV, to generate the P^{th} frame of image.

For example, forward mapping and backward mapping may be performed based on 3D_MV to obtain a 3D error graph, and linear conversion is performed on the 3D error graph to obtain a weight of 3D_MV; and forward mapping and backward mapping may be performed based on 2D_MV to obtain a 2D error graph, and then linear conversion is performed on the 2D error graph to obtain a weight of 2D_MV

In another example, respective weights of 3D_MV and 2D_MV may be manually set. Optionally, the weight corresponding to 3D_MV may be set to be greater than the weight corresponding to 2D_MV.

Step 510B: The electronic device displays the rendered P^{th} frame of image.

The P^{th} frame of image is only used for differentiation, and represents a preset frame generated based on the (N-1)^{th} frame of image and the N^{th} frame of image.

Specifically, the electronic device sends the rendered P^{th} frame of image to the display unit 160 shown in FIG. 1 for display.

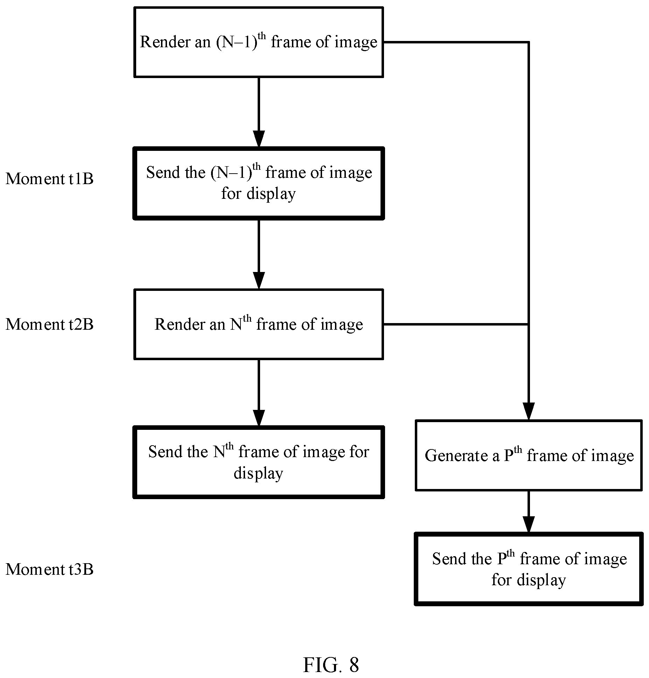

It may be understood that, in the extrapolation mode, the generated P^{th} frame of image is sent for display after the (N-1)^{th} frame of image and the N^{th} frame of image. FIG. 8 is a time sequence diagram of image processing in an extrapolation mode according to an embodiment of this application. For example, the (N-1)^{th} frame of image is sent for display at a moment t1B, the N^{th} frame of image may be sent for display at a moment t2B, and the P^{th} frame of image may be sent for display at a moment t3B, where the moment t1B is earlier than the moment t2B, and the moment t2B is earlier than the moment t3B. It may be understood that the (N-1)^{th} frame of image is obtained by rendering the (N-1)^{th} frame of image before being sent for display at the moment t1B, the N^{th} frame of image is obtained by rendering the N^{th} frame of image before being sent for display at the moment t2B, and the P^{th} frame of image is generated based on the rendered (N-1)^{th} frame of image and N^{th} frame of image before being sent for display at the moment t3B.

According to the method provided in embodiments of this application, during frame interpolation/extrapolation, the electronic device can perform MV calculation with reference to 3D data of a pre-marked preset object in previous and next native rendered frames, and can further fuse 3D_MV and 2D_MV to obtain an MV for generating a predicted frame, thereby improving quality of the generated predicted frame, and reducing a probability that problems such as ghosting and blurring occur in the predicted frame.

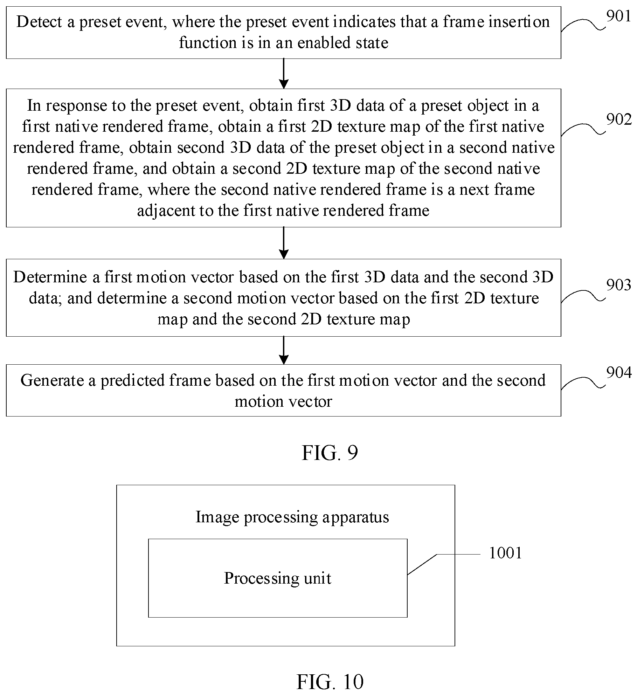

FIG. 9 is another possible schematic flowchart of an image processing method according to an embodiment of this application. As shown in FIG. 9, the method may be applied to an electronic device, and may include the following steps.

Step 901: Detect a preset event, where the preset event indicates that a frame interpolation/extrapolation function is in an enabled state.

Optionally, that the preset event is detected may be implemented as: detecting a first operation on a first control, where the first control is configured to manage the frame interpolation/extrapolation function, and the first operation is for enabling the frame interpolation/extrapolation function. With reference to FIG. 3A and FIG. 3B, the first control may be the high frame rate control shown in the interface 301, and the first operation may be setting the high frame rate control to be in the enabled state as shown in the interface 302.

Step 902: In response to the preset event, obtain first 3D data of a preset object in a first native rendered frame, obtain a first 2D texture map of the first native rendered frame, obtain second 3D data of the preset object in a second native rendered frame, and obtain a second 2D texture map of the second native rendered frame, where the second native rendered frame is a next frame adjacent to the first native rendered frame.

For example, the first 3D data or the second 3D data includes at least one of the following data: 3D geometric vertex data, 3D polygon mesh data, and 3D geometric edge data.

Step 903: Determine a first motion vector based on the first 3D data and the second 3D data; and determine a second motion vector based on the first 2D texture map and the second 2D texture map. The first motion vector may be understood as 3D_MV in the foregoing embodiment, the second motion vector may be understood as 2D_MV in the foregoing embodiment, and a third motion vector may be understood as the fused MV in the foregoing embodiment.

Optionally, that the first motion vector is determined based on the first 3D data and the second 3D data may be implemented as: determining the first motion vector based on the first 3D data and the second 3D data by using a multi-level hash algorithm. For example, refer to FIG. 6 and corresponding descriptions.

Step 904: Generate a predicted frame based on the first motion vector and the second motion vector. The predicted frame may be understood as the M^{th} frame of image in the scenario in which frame interpolation/extrapolation is performed in the interpolation mode or the P^{th} frame of image in the scenario in which frame interpolation/extrapolation is performed in the extrapolation mode in the foregoing embodiments.

For example, that the predicted frame is generated based on the first motion vector and the second motion vector may be implemented as: determining a first weight factor of the first motion vector and a second weight factor of the second motion vector; performing weighted fusion on the first motion vector and the second motion vector based on the first weight factor and the second weight factor, to obtain a third motion vector; and generating the predicted frame based on the third motion vector.

In a possible design, a display sequence of the predicted frame, the first native rendered frame, and the second native rendered frame is: displaying the first native rendered frame; displaying the predicted frame; and displaying the second native rendered frame. It may be understood that, in this design, frame interpolation/extrapolation is performed in the interpolation mode.

In another possible design, a display sequence of the predicted frame, the first native rendered frame, and the second native rendered frame is: displaying the first native rendered frame; displaying the second native rendered frame; and displaying the predicted frame. It may be understood that, in this design, frame interpolation/extrapolation is performed in the extrapolation mode.

For a specific implementation process of step 901 to step 904 in FIG. 9, refer to the description in the foregoing embodiment. Details are not described herein again.

FIG. 10 is a diagram of an example of a possible structure of an image processing apparatus according to an embodiment of this application. As shown in FIG. 10, the image processing apparatus may include a processing unit 1001.

In an implementation, the image processing apparatus may be configured to implement the method performed by any electronic device in the foregoing embodiments. The image processing apparatus may be the electronic device, or may be a chip or a chip set in the electronic device, or a part that is of a chip and that is configured to perform a function related to the method. The processing unit 1001 is configured to perform the following processing: detecting a preset event, where the preset event indicates that a frame interpolation/extrapolation function is in an enabled state; in response to the preset event, obtaining first 3D data of a preset object in a first native rendered frame, obtaining a first 2D texture map of the first native rendered frame, obtaining second 3D data of the preset object in a second native rendered frame, and obtaining a second 2D texture map of the second native rendered frame, where the second native rendered frame is a next frame adjacent to the first native rendered frame; determining a first motion vector based on the first 3D data and the second 3D data; and determining a second motion vector based on the first 2D texture map and the second 2D texture map; and generating a predicted frame based on the first motion vector and the second motion vector.

In a possible design, the image processing apparatus may further include a display unit. The display unit may be configured to display the predicted frame in an interpolation mode, or display the predicted frame in an extrapolation mode. For a specific implementation process, refer to the description in the foregoing embodiment. Details are not described herein again.

Division into units (functional modules) in embodiments of this application is an example and is merely logical function division, and there may be another division manner during actual implementation. In addition, the units in embodiments of this application may be integrated into one processor, each of the units may exist alone physically, or two or more units may be integrated into one module. The integrated unit may be implemented in a form of hardware, or may be implemented in a form of software functional module. It may be understood that, for functions or implementations of the units in embodiments of this application, further refer to related descriptions in the method embodiments.

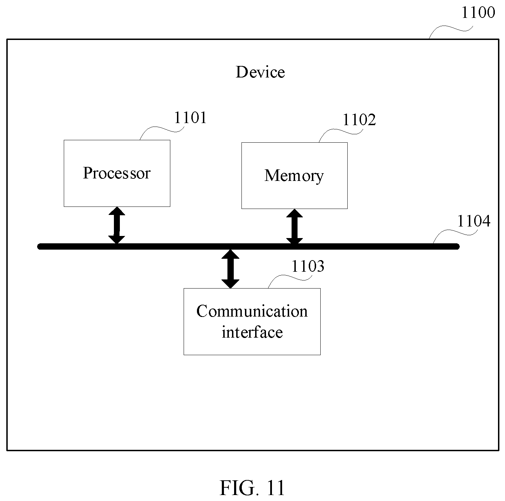

FIG. 11 is a diagram of an example of a possible structure of a device according to an embodiment of this application. The device may be configured to implement functions of the electronic device in the foregoing embodiments, and therefore can also achieve beneficial effects of the foregoing embodiments.

As shown in FIG. 11, the device 1100 may include a processor 1101, a memory 1102, and a communication interface 1103. The processor 1101, the memory 1102, and the communication interface 1103 are coupled to each other. Optionally, the memory 1102 may be configured to store instructions executed by the processor 1101, or store input data required by the processor 1101 to run instructions, or store data generated after the processor 1101 runs instructions. The communication interface 1103 may be a transceiver or an input/output interface.

Optionally, as shown in FIG. 11, the processor 1101, the memory 1102, and the communication interface 1103 are connected to each other by a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

When the device 1100 is used in the electronic device, the processor 1101 may be configured to implement a processing function of the electronic device in the foregoing embodiment. For example, the processor 1101 may be configured to perform an action of the processing unit 1001 when the image processing apparatus is used in the electronic device. The communication interface 1103 may be configured to implement a transceiver function of the electronic device in the foregoing embodiment. Details are not described in this application.

It may be understood that, the processor 1101 in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The memory 1102 in FIG. 11 in this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. It should be noted that the memory in the system and method described in this specification includes but is not limited to these and any memory of another appropriate type.

Based on the foregoing embodiments, this application further provides a computer program product including instructions. When the computer program product is run on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can instruct the computer or the another programmable data processing device to work in a specific manner, so that instructions stored in the computer-readable memory generate an artifact that includes an instruction apparatus. The instruction apparatus implements a function specified in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a function specified in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of the claims of this application and their equivalent technologies.

## Claims

1. An image processing method, applied to an electronic device, wherein the method comprises:
detecting a preset event, wherein the preset event indicates that a frame interpolation/extrapolation function is in an enabled state;
in response to the preset event, obtaining first 3D data of a preset object in a first native rendered frame, obtaining a first 2D texture map of the first native rendered frame, obtaining second 3D data of the preset object in a second native rendered frame, and obtaining a second 2D texture map of the second native rendered frame, wherein the second native rendered frame is a next frame adjacent to the first native rendered frame;
determining a first motion vector based on the first 3D data and the second 3D data; and determining a second motion vector based on the first 2D texture map and the second 2D texture map; and
generating a predicted frame based on the first motion vector and the second motion vector.

2. The method according to claim 1, wherein the method further comprises:
displaying the first native rendered frame;
displaying the predicted frame; and
displaying the second native rendered frame.

3. The method according to claim 1, wherein the method further comprises:
displaying the first native rendered frame;
displaying the second native rendered frame; and
displaying the predicted frame.

4. The method according to any one of claims 1 to 3, wherein determining the first motion vector based on the first 3D data and the second 3D data comprises:
determining the first motion vector based on the first 3D data and the second 3D data by using a multi-level hash algorithm.

5. The method according to any one of claims 1 to 4, wherein generating the predicted frame based on the first motion vector and the second motion vector comprises:
determining a first weight factor of the first motion vector and a second weight factor of the second motion vector;
performing weighted fusion on the first motion vector and the second motion vector based on the first weight factor and the second weight factor, to obtain a third motion vector; and
generating the predicted frame based on the third motion vector.

6. The method according to any one of claims 1 to 5, wherein detecting the preset event comprises:
detecting a first operation on a first control, wherein the first control is configured to manage the frame interpolation/extrapolation function, and the first operation is for enabling the frame interpolation/extrapolation function.

7. The method according to any one of claims 1 to 6, wherein the first 3D data or the second 3D data comprises at least one of the following data: 3D geometric vertex data, 3D polygon mesh data, and 3D geometric edge data.

8. An electronic device, comprising at least one processor, wherein the at least one processor is coupled to at least one memory, and the at least one processor is configured to read a computer program stored in the at least one memory, to perform the method according to any one of claims 1 to 7.

9. A chip system, wherein the chip system comprises a processing circuit and a storage medium, the storage medium stores instructions, and when the instructions are executed by the processing circuit, the method according to any one of claims 1 to 7 is implemented.

10. A computer-readable storage medium, wherein the computer-readable storage medium stores instructions, and when the instructions are run on a computer, the computer is enabled to perform the method according to any one of claims 1 to 7.

11. A computer program product, wherein when the computer program product is run on a computer, the computer is enabled to perform the method according to any one of claims 1 to 7.
